# EUROPEAN PATENT APPLICATION

(11) **EP 3 196 783 A1**
(43) Date of publication of application: **26.07.2017**
(21) Application number: 17151695.8
(22) Date of filing: 17.01.2017
(51) Int. Cl.: G06F 17/30, G06F 3/048

(54) **OPEN COLLABORATION BOARD WITH MULTIPLE INTEGRATED SERVICES**

(30) Priority: 22.01.2016 US 201615004663
(71) Applicant: Ricoh Company, Ltd., Tokyo 143-8555 (JP)
(72) Inventor: NELSON, Steven A., Campbell, CA California 95008 (US); MALATESHA, Rathnakara, Campbell, CA California 95008 (US); KITADA, Hiroshi, West Caldwell, NJ New Jersey 07006 (US); WONG, Lana, West Caldwell, NJ New Jersey 07006 (US)
(74) Representative: Schwabe - Sandmair - Marx

(57) **Abstract**

An open collaboration approach using an interactive whiteboard appliance is presented. An interactive whiteboard application executes on a computing device and causes performing receiving a request to invoke a web application. The request comprises an Internet address of the web application. A data management application executes on the computing device and causes accessing the web application using the Internet address. Upon accessing the web application, the web application is launched on the computing interactive whiteboard appliance. Upon detecting that first data has been received from the web application, a first window instance is generated and displayed on the display of the computing interactive whiteboard appliance. The first data to be processed by the first window instance is displayed on the display of the computing interactive whiteboard appliance.

## Description

### FIELD OF THE INVENTION

Embodiments relate generally to integrating open collaboration whiteboard with multiple integrated services.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Interactive electronic whiteboard appliances allow users to view, modify and display electronic information on whiteboard displays, and have the information propagated to other web applications and devices. However, the whiteboard appliances have limited capabilities to share the information between applications and integrated services and to collaborate using the whiteboard displays.

### SUMMARY

An interactive whiteboard appliance includes one or more processors, one or more memories, a display, and an interactive whiteboard applications. An interactive whiteboard application executes on a computing device and causes performing receiving a request to invoke a web application. The request comprises an Internet address of the web application. A data management application executes on the computing device and causes accessing the web application using the Internet address.

Upon accessing the web application: executing the data management application causes launching the web application on the computing interactive whiteboard appliance; detecting that first data has been received from the web application; causing a first window instance to be generated and displayed on the display of the computing interactive whiteboard appliance; and causing the first data to be processed by the first window instance and displayed on the display of the computing interactive whiteboard appliance.

### BRIEF DESCRIPTION OF THE DRAWINGS

In the figures of the accompanying drawings like reference numerals refer to similar elements.
FIG. 1 is a block diagram that depicts an arrangement for open collaboration with multiple integrated services using an interactive whiteboard appliance.
FIG. 2 is a block diagram that depicts an arrangement for open collaboration with multiple integrated and external services using an interactive whiteboard appliance.
FIG. 3A is a block diagram that depicts an arrangement for open collaboration with multiple integrated services using an interactive whiteboard appliance.
FIG. 3B is a flow diagram that depicts example activities performed during open collaboration with multiple integrated services using an interactive whiteboard appliance.
FIG. 4 is a block diagram that depicts an example interactive whiteboard display of an interactive whiteboard appliance.
FIG. 5 is a screen snapshot that depicts an example menu of an interactive whiteboard display of an interactive whiteboard appliance.
FIG. 6 is a screen snapshot that depicts an example interactive whiteboard display of an interactive whiteboard appliance facilitating collaboration with a drawing application.
FIG. 7 is a screen snapshot that depicts an example interactive whiteboard display of an interactive whiteboard appliance facilitating collaboration with a prototyping application.
FIG. 8 is a screen snapshot that depicts an example interactive whiteboard display of an interactive whiteboard appliance facilitating collaboration with a sketching application.
FIG. 9 is a screen snapshot that depicts an example interactive whiteboard display of an interactive whiteboard appliance facilitating collaboration with a Scrum application.
FIG. 10 is a flow diagram that depicts example activities performed during open collaboration with pre-loaded integrated services.
FIG. 11 is a block diagram that depicts an arrangement for open collaboration with multiple integrated services using an interactive whiteboard appliance.
FIG. 12 is a flow diagram that depicts example activities performed during open collaboration with multiple external integrated services.
FIG. 13 is a block diagram that depicts extensions to an open collaboration approach using an interactive whiteboard appliance.
FIG. 14 is a block diagram that depicts extensions to an open collaboration approach using an interactive whiteboard appliance.
FIG. 15 is a block diagram that depicts an example computer system upon which embodiments may be implemented.

### DETAILED DESCRIPTION

In the following description, for the purposes of explanation, numerous specific details are set forth in order to provide a thorough understanding of the embodiments. It will be apparent, however, to one skilled in the art that the embodiments may be practiced without these specific details. In other instances, well-known structures and devices are shown in block diagram form in order to avoid unnecessarily obscuring the embodiments.
**I. OVERVIEW**
**II. SYSTEM ARCHITECTURE**
   **A. Interactive Whiteboard Appliance**
   **B. Communications Interface**
   **C. Interactive Whiteboard Application**
   **D. Data Management Application**
   **E. Browser Library**
**III. OPEN COLLABORATION WITH PRE-LOADED SERVICES**
**IV. OPEN COLLABORATION WITH EXTERNAL SERVICES**
   **A. Example System Configuration**
   **B. Example Open Collaboration with External Services**
**V. OPEN COLLABORATION BOARD WITH INTEGRATED SERVICES**
   **A. Example Open Collaboration Using Dedicated Window Instances**
   **B. Example of Open Collaboration Using Dedicated Window Instances**
   **C. Example Workflow for Open Collaboration Using Dedicated Window Instances**
   **D. Example Menu for Initiating Open Collaboration**
   **E. Examples of Open Collaboration Using Multiple Window Instances**
**VI. EXTENSIONS**
   **A. First Example**
   **B. Second Example**
**VII. IMPLEMENTATION MECHANISMS**

### I. OVERVIEW

An interactive whiteboard appliance includes the open collaboration capability to facilitate open collaboration with multiple integrated services. The collaboration capabilities are integrated and managed in a user-friendly manner, providing user-friendly interfaces and accessibility.

In an embodiment, open collaboration using a whiteboard appliance is implemented using a suite of applications and libraries. For example, a whiteboard application may collaborate with a data management application and browser libraries to manage the interactions between the appliance and multiple integrated services. Some integrated services may be provided by executing web applications installed on the interactive whiteboard appliance. Some other integrated services may be provided by executing external applications installed or implemented on remote servers, cloud systems and networks.

Whiteboard applications and management applications may also provide graphical user interfaces and controls to allow users to enable open collaboration sessions with local and external network services. For example, the interfaces and controls may be used to share information between different web applications, and to store information at various locations.

The approach may be implemented on the interactive whiteboard appliances that already have various network services installed, as well as on the interactive whiteboard appliances that are configured to communicate with external network services.

### II. SYSTEM ARCHITECTURE

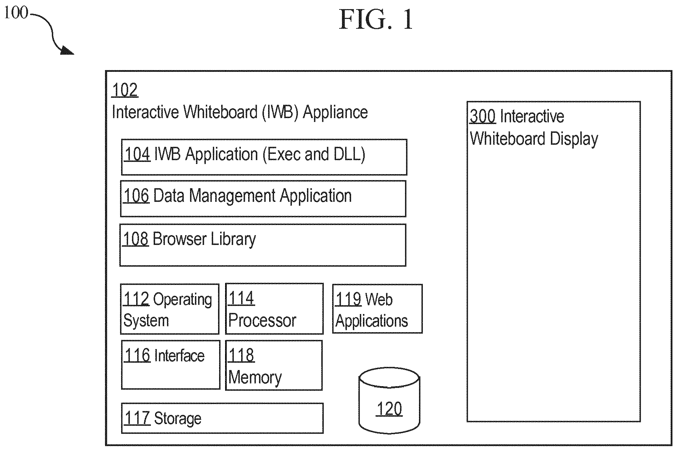

FIG. 1 is a block diagram that depicts an arrangement 100 for open collaboration with multiple integrated services using an interactive whiteboard appliance 102. Arrangement 100 includes an interactive whiteboard (IWB) appliance 102 hosting an IWB application 104 and a data management application 106. The arrangements may also include one or more browser libraries 108, one or more web applications 119, an operating system 112, one or more processors 114, one or more communication interfaces 116, one or more memory units 118, one or more storage units 117 and one or more storage devices 120. Web applications 119 may include one or more software application that have been installed, or pre-loaded, on IWB appliance 102 prior to initiating an open collaboration session. Communications interface 116 may be configured to generate contents and to display the contents on an IWB display 300. The above listed components are described in detail in the sections below.

Arrangement 100 is not limited to the particular elements depicted in FIG. 1 and may include fewer or additional elements depending upon a particular implementation. Embodiments are described herein in the context of a single IWB appliance 102 for purposes of explanation; however, the approach is applicable to any number of IWB appliances. The various elements depicted in FIG. 1 may communicate with each other via direct communications links, which are not depicted in FIG. 1 for purposes of explanation.

In an embodiment, data management application 106 is configured to communicate with IWB application 104 and browser library 108. Each of data management application 106, IWB application 104 and browser library 108 may comprise one or more executable modules configured to facilitate communications between other elements of IWB appliance 102 and to facilitate open collaboration with multiple integrated services. Detailed descriptions of data management application 106, IWB application 104 and browser library 108 are provided below.

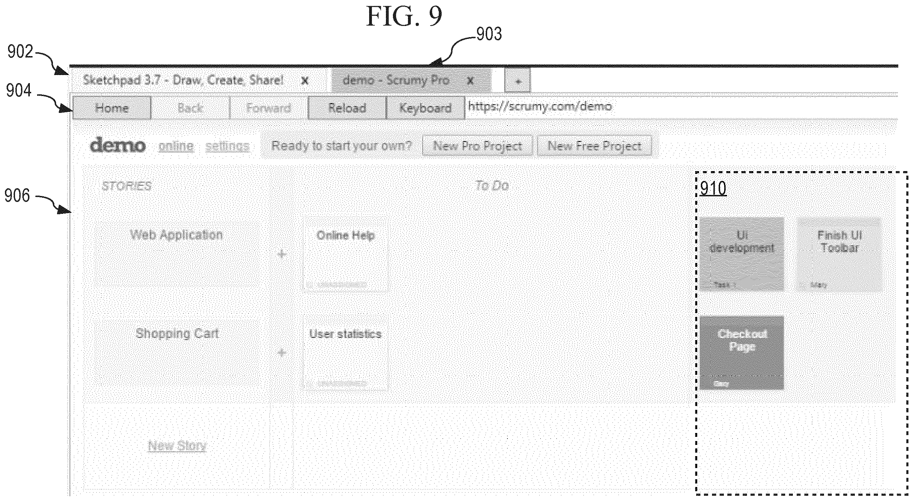

Web applications 119 may include one or more software applications that have been installed on the IWB appliance 102 and available for execution. Web applications 119 may include, for example, document processing applications, such as MsWord. Web applications 119 may also include drawing applications, such Sketch, or Paint. Furthermore, web applications 119 may include mockup designing and prototyping applications, such as Mockup, and collaboration and business-oriented applications, such as Scrum or Scrumy Pro. An example of a display generated by a Scrum web application is depicted in FIG. 9.

Operating system 112 executes on IWB appliance 102 and may be any type of operating system. In some implementations, operating system 112 may include multiple operating systems of varying types, depending upon a particular implementation. Operating system 112 may include an API configured to provide access to functionalities provided by operating system 112. The API may be used by, for example, data management application 106 to initiate functionalities provided by IWB application 104, browser library 108 and operating system 112.

Processor 114 may include any number and types of processors implemented using any type of processing technology. Storage 117 may be implemented by any number and types of memories, including volatile memory and non-volatile memory, which may vary depending upon a particular implementation.

In an embodiment, arrangement 100 may include additional hardware, firmware and software elements that are not depicted in FIG. 1, and that may vary depending upon a particular implementation.

### A. Interactive Whiteboard Appliance

The approaches described herein are applicable to IWB appliances that may be configured to accommodate downloading and installing web applications on the whiteboard appliances and to communicate with external web applications installed on other devices and servers.

In an embodiment, IWB appliance 102 is an electronic whiteboard appliance that supports interactive open collaboration with multiple integrated services. The IWB appliance 102 may be configured to manage open collaboration sessions in a user-friendly manner by facilitating transfers of information between window instances, and facilitating modifications of the manner in which the window instances are displayed in IWB display 300. Furthermore, IWB appliance 102 may be configured to facilitate communications between various web applications, facilitate transfer of information to storage devices, and the like

IWB appliance 102 may also be configured to provide a graphical user interface (GUI) and GUI controls. The GUI controls may allow users to select web applications, provide requests to generate window instances, provide requests to transfer content information from one window instance to another window instance, and the like.

IWB appliance 102 is not limited to a particular set of components or features. For example, IWB appliance 102 may include fewer or more components that those depicted in FIG. 1 and described herein, and the particular components of IWB appliance 102 may vary depending upon a particular implementation. For example, IWB appliance 102 may also include manual controls, such as buttons, sliders, etc., not depicted in FIG. 1. These additional controls may be used to perform various functions on, for example, mobile devices, such as powering on/off, changing the state of IWB appliance 102, and activating or updating IWB display 300.

IWB display 300 may be implemented using any type of display configured to display images and information for a user. IWB display 300 may also be able to receive user input and embodiments are not limited to any particular implementation of IWB display 300. As one non-limiting example, IWB display 300 may be a touchscreen IWB display 300 that both displays information to users and allows users to select GUI objects. IWB appliance 102 may have any number of IWB displays 300, of similar or varying types, and located anywhere on IWB appliance 102.

### B. Communications Interface

Communications interface 116 may include computer hardware, software, or any combination of computer hardware and software to provide wired and/or wireless communications between IWB appliance 102 and other devices and/or networks, such as servers, external web applications, storage devices, and client devices. For example, communications interface 116 may provide communications between IWB appliance 102 and external services, web applications, and the like.

The particular components of communications interface 116 may vary, and depend upon a particular implementation, and embodiments are not limited to any particular implementation of communications interface 116.

### C. Interactive Whiteboard Application

IWB application 104 is an application that executes on IWB appliance 102 and, in conjunction with data management application 106 and browser library 108, facilitates open collaboration sessions launched on IWB appliance 102.

In an embodiment, IWB application 104 is executed on a computing device and facilitates generating and displaying window instances on IWB display 300. For example, executing IWB application 104 may cause a first window instance to be generated and displayed on the display of IWB appliance 102. Furthermore, executing IWB application 104 may cause first data to be processed by the first window instance generated and displayed on the display of IWB appliance 102. Moreover, IWB application 104 may cause generating a second window instance and displaying the second window on the display of the IWB application appliance 102.

In an embodiment, IWB application 104 comprises and one or more components implementing a dynamic link library (DLL). A DLL is a library that contains code and data that can be used by more than one program at the same time. Each program can use the functionalities that are included in the DLL to implement various functionalities and share reusable components. Sharing the reusable components promotes efficacy and efficient memory usage.

In an embodiment, in a DLL environment, a program can be modularized into separate components, and upon installing the module, each component can be loaded into a main program at a run time. Because the modules are separate, the load time of the program is faster, and a module is only loaded when that functionality is requested.

Relying on a DLL environment provides many benefits. For example, when multiple programs use the same library of functions, a DLL library can reduce the duplication of code that is loaded on the disk and in physical memory. This can greatly improve the performance of all programs executed on the computer device at a given time.

### D. Data Management Application

Data management application 106 is an application that executes on IWB appliance 102 and manages interactive electronic whiteboard sessions and open collaboration session with multiple integrated services. Data management application 106 in conjunction with a GUI generating component, provides GUI controls on IWB display 300 that allow users to initiate and manage open collaboration session with multiple integrated services.

### E. Browser Library

Interactive whiteboard appliance 102 depicted in FIG. 1 may communicate with one or more browser libraries 108. Browser libraries 108 provide functionality for establishing and managing open collaboration session with multiple integrated services. For example, browser libraries 108 may provide access to the functionality provided by IWB application 104 and/or data management application 106. Functionality provided by browser libraries 108 may be provided, for example, by one or more applications and/or routines provided by the Microsoft Lync SDK.

In an embodiment, browser libraries 108 are collections of implementations of behavior, written in terms of a language that has a well-defined interface by which the behavior is invoked. The browser libraries 108 may be used by higher level program uses a library to make system calls. Utilization of the browser libraries 108 allows avoiding implementing those system calls over and over again. In addition, the behavior is provided for reuse by multiple independent programs. A program invokes the library-provided behavior via a mechanism of the language. For example, in a simple imperative language such as C, the behavior in a library is invoked by using C's normal function-call.

Library code is organized in such a way that it can be used by multiple programs that have no connection to each other, while code that is part of a program is organized to only be used within that one program. This distinction can gain a hierarchical notion when a program grows large, such as a multi-million-line program. The value of a library is the reuse of the behavior. When a program invokes a library, it gains the behavior implemented inside that library without having to implement that behavior itself. Libraries encourage the sharing of code in a modular fashion, and ease the distribution of the code.

In an embodiment, browser libraries 108 implement the Chromium embedded framework (CEF). The CEF is an open source project that allows developers to easily display HTML content in their desktop applications. The CEF provides capabilities to finely control an HTML view of the content, and to render the HTML content through, for example, the Chromium browser on a JavaScript virtual machine.

The CEF provides a variety of features. For example, the CEF provides an off screen rendering capabilities. The off screen rendering allows an embedder to receive paint notifications from the CEF instead of having the CEF render directly to a native window. Upon receiving a notification, an embedder can handle the rendering using for example, the OpenGL or Direct3D.

### III. OPEN COLLABORATION WITH PRE-LOADED SERVICES

IWB appliance 102 provides the open collaboration capability, which is integrated and managed to facilitate an open collaboration between multiple integrated services. In an embodiment, IWB application 104 collaborates with data management application 106 to manage collaboration sessions with multiple integrated services. Examples of integrated services provided are described in this section.

Referring again to FIG. 1, IWB appliance 102 hosts, among others, IWB application 104, data management application 106, one or more browser libraries 108, and one or more pre-loaded web applications 119 configured to provide integrated services. Web applications 119 may include applications installed locally with respect to IWB appliance 102. They may include MsWord applications, drawing applications -- such Sketch, Paint, mockup designing and prototyping applications -- such as Mockup, collaboration and business-oriented applications -- such as Scrum, and the like.

In an embodiment, a user invokes integrated services pre-loaded on IWB 102 by providing a request via IWB display 300 of IWB appliance 102. For example, a user may launch a web browser generated by IWB application 104, and use the web page generated by the web browser and displayed on interactive whiteboard display 300 to provide the request. The request may be provided by entering a URL into an address text box of the web page provided by the web browser. The URL may identify a particular service requested by the user. Upon receiving the request, IWB application 104 may identify the requested service, and determine whether the requested service may be provided by one or more web applications 119. If so, then IWB application 104 may invoke data management application 106 to facilitate launching a particular integrated service on IWB display 300.

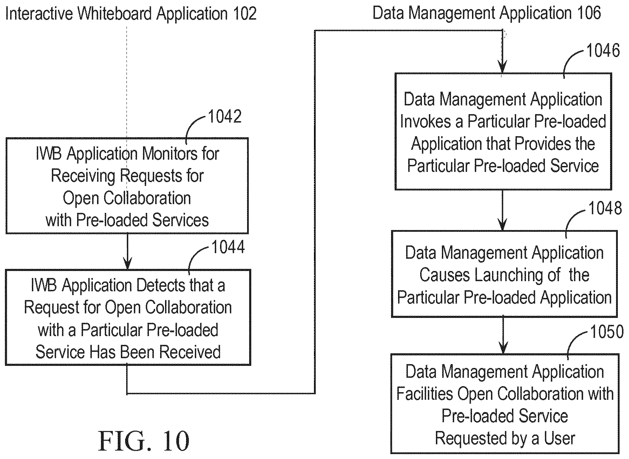

FIG. 10 is a flow diagram that depicts example activities performed during open collaboration with pre-loaded integrated services. In step 1042, IWB application 104 monitors one or more user interfaces implemented in IWB 102 to determine whether any requests for open collaboration with pre-loaded integrated services have been received. Non-limiting examples of the requests may include a request for launching a particular pre-loaded application selected from one or more web applications 119.

A request may include a URL provided via an address text box of a web page generated by a web browser and displayed on IWB display 300. The URL may identify a particular pre-loaded web application that provides a particular service requested by a user.

In step 1044, IWB application 104 detects that a request for open collaboration with a particular pre-loaded service has been received. The request may indicate that the requested particular pre-loaded service may be provided by a particular pre-loaded application, and thus may indicate a request to invoke the particular pre-loaded web application, from one or more web applications 119. The request may comprise a URL of the particular web application.

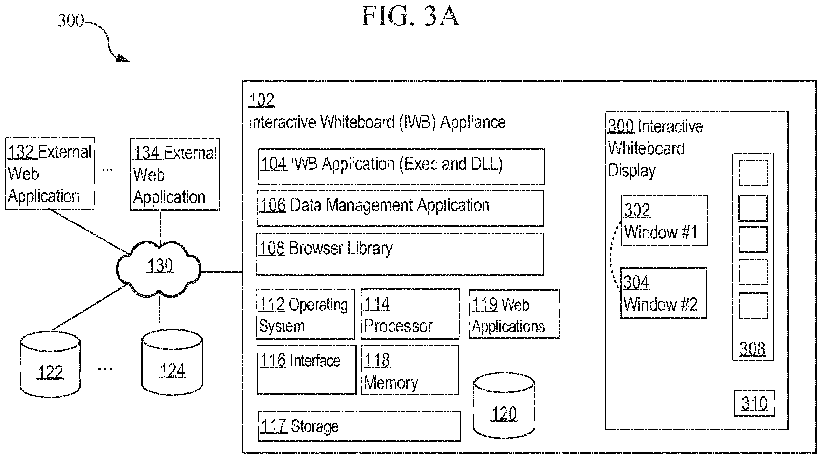

In step 1046, IWB application 104 causes accessing a particular pre-loaded web application identified by a URL included in the request. If the particular pre-loaded web application is one of the web applications 119, then IWB application 104 causes accessing for example, an index of the web applications 119. The index is used to determine a location of the particular pre-loaded web application. The determined location is used to invoke the particular pre-loaded web application. However, if the particular pre-loaded web application is not included in the index of the web applications 119, then IWB application 104 may invoke other components of IWB appliance 102 to determine a location of the particular web application. For example, if the requested service is not provided by any of the web applications 119, then IWB application 104 may try to determine whether the requested service is provided by any of external services, described in detail in FIG. 3A.

Upon determining that a particular pre-loaded application, providing a requested particular pre-loaded services, has been accessed, in step 1048, IWB application 104 invokes data management application 106 to cause launching of the particular pre-loaded application. Launching of the particular pre-loaded application may include generating a window instance for the particular pre-loaded application, and displaying a graphical representation of the window on interactive whiteboard display 300.

In step 1050, data management application 106 facilitates open collaboration with a pre-loaded service requested by a user. This may include launching, executing and maintaining interoperability of a pre-loaded application providing the requested service. For example, data management application 106 may facilitate receiving data from the pre-loaded application, displaying the received data in a window generated and displayed by the pre-loaded application, receiving input from the user, communicating the user input to the pre-loaded application, and so forth. Furthermore, this may include receiving additional data from a GUI generated by the pre-loaded web application, causing generating a new window instance and causing displaying the new window instance on IWB display 300. Moreover, this may include causing the additional data to be displayed in a display region generated by the new window display.

Processing the requests for open collaboration with pre-loaded services may be repeated multiple times and for any user authorized to access IWB appliance 102 either locally or remotely.

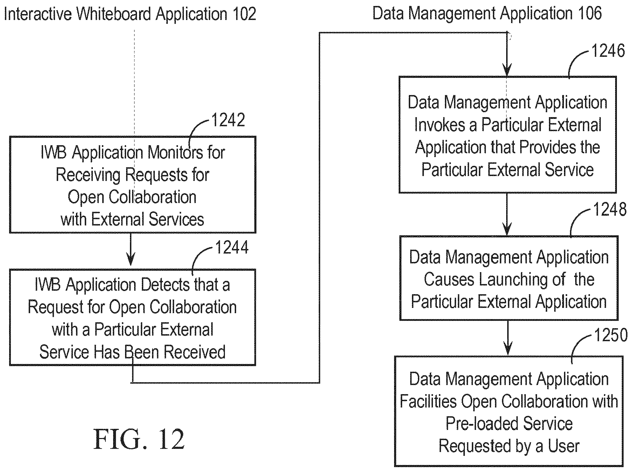

Furthermore, processing the requests for open collaboration with pre-loaded services may include additional processing that depends on the type of the requested pre-loaded services. For example, the processing may include establishing communications links with local or remote storage devices and storing or retrieving data from the local or remote storage devices if such are requested. Moreover, the processing may include establishing communications links with external web applications or external integrated services, and facilitating open collaboration with such applications and services. Examples of open collaboration with external services are described in FIG. 12.

### IV. OPEN COLLABORATION WITH EXTERNAL SERVICES

IWB appliance 102 includes the open collaboration capabilities that are integrated and managed to facilitate an open collaboration with multiple integrated services. The integrated services may be provided by executing external applications installed or implemented on remote servers, cloud systems or networks are described in this section.

### A. Example System Configuration

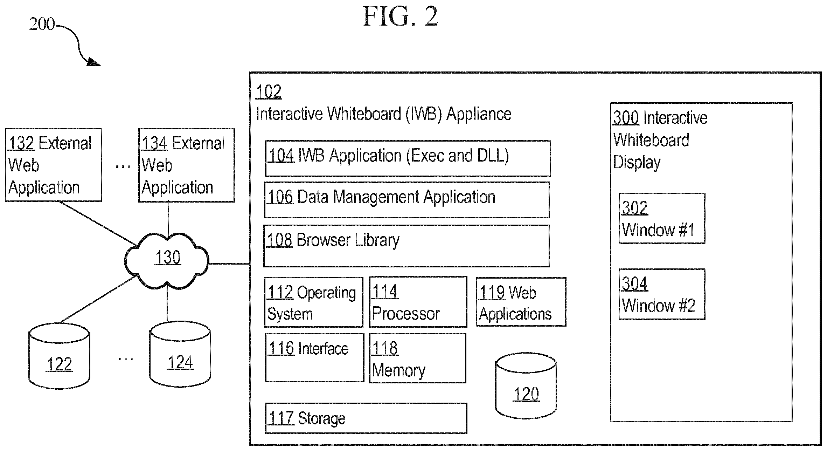

FIG. 2 is a block diagram that depicts an arrangement 200 for open collaboration with multiple integrated services using an interactive whiteboard appliance. Arrangement 200 includes the elements already described in FIG. 1, and one or more additional elements not depicted in FIG. 1. For example, arrangement 200 may include one or more computer networks 130, which facilitate communications between a plurality of external web applications 132, 134, a plurality of external storage devices 122, 124, and IWB 102.

Computer network 130 depicted in FIG. 2 may be a single computer network or may include any number and type of wired or wireless networks, such as local area networks (LANs), wide area networks (WANs), the Internet, etc. The various elements depicted in FIG. 2 may also communicate with each other via direct communications links that are not depicted in FIG. 2.

External web applications 132, 134 are configured to provide external services to IWB 102. External web applications 132, 134 may include one or more software applications that have been installed on servers located remotely with respect to IWB 102, and are available to IWB 102 via communications connections established via network 130.

External web applications 132, 134, may include for example, document processing applications (such as MsWord applications), drawing applications (such as Sketch, Paint), mockup designing and prototyping applications (such as Mockup), collaboration and business-oriented applications (such as Scrum), and the like.

Arrangement 200 is not limited the particular elements depicted in FIG. 2 and may include fewer or additional elements depending upon a particular implementation. Embodiments are described herein in the context of a single IWB appliance 102 for purposes of explanation, but the approach is applicable to any number of interactive whiteboard appliances.

### B. Example Open Collaboration with External Services

FIG. 12 is a flow diagram that depicts example activities performed during open collaboration with multiple external integrated services. In step 1242, IWB application 104 monitors one or more user interfaces implemented in IWB 102 to determine whether any requests for open collaboration with external integrated services have been received. Non-limiting examples of the requests may include a request for launching a particular external web application, such as any of external web applications 132, 134. A request may include a URL provided via an address text box of a web page generated by a web browser and displayed on interactive whiteboard display 300. The URL may identify a particular external web application that provides a particular service requested by a user.

In step 1244, IWB application 104 detects that a request for open collaboration with a particular external service has been received. The request may indicate that the requested particular external service may be provided by a particular external web application. This may indicate a request to invoke the particular external web application, from one or more external web applications 132, 134. The particular external web application may be configured to provide the particular service. The request may comprise a URL of the particular web application.

In step 1246, IWB application 104 invokes data management application 106 to cause accessing a particular external web application identified by a URL included in the request. This may include establishing a communications connection with a remote server that hosts the particular external web application. For example, data management application 106 may use the URL included in the request to determine a location of the particular external web application, and establish a communications connection to the location, identified based on the URL, with the server hosting the particular external web application.

In step 1248, data management application 106 causes launching of the particular external application served from a remote server. Launching of the particular external application may include generating a window instance for the particular external application, and displaying a graphical representation of the window on interactive whiteboard display 300.

In step 250, data management application 106 facilitates open collaboration with an external service requested by a user. This may include launching, executing and maintaining interoperability of the external application providing the requested service. For example, data management application 106 may facilitate receiving data from the external web application, displaying the received data in a window generated and displayed by the external application, receiving input from the user, communicating the user input to the external application, and so forth. Furthermore, this may include receiving additional data from a GUI generated by the external web application, causing generating a new window instance and causing displaying the new window instance on IWB display 300. Moreover, this may include causing the additional data to be displayed in a display region generated by the new window instance.

Processing requests for open collaboration with multiple external services may be repeated multiple times and for any user authorized to access IWB appliance 102 either locally or remotely. Furthermore, the processing of the requests for open collaboration with multiple external services may include additional processing that depends on the type of the requested pre-loaded services. For example, the processing may include establishing communications links with local or remote storage devices and storing or retrieving data from the local or remote storage devices if such are requested. The processing may also include invoking web applications installed locally on IWB appliance 102, and facilitating open collaboration with such applications and services. Examples of open collaboration with locally installed services are described in FIG. 10.

### V. OPEN COLLABORATION BOARD WITH INTEGRATED SERVICES

### A. Open Collaboration Using Dedicated Window Instances

FIG. 3A is a block diagram that depicts an arrangement 300 for open collaboration with multiple integrated services using an interactive whiteboard appliance 102. Arrangement 300 includes the elements already described in FIG. 1 and FIG. 2, and one or more additional elements not depicted in FIG. 1 or FIG. 2. For example, arrangement 300 may include various controls 308, 310 and window display areas 302, 304 that are implemented and accessible via IWB display 300.

In an embodiment, IWB application 102 is configured to cause a GUI to be generated and displayed on IWB display 300 of IWB appliance 102. The GUI may include one or more GUI objects or controls 308, 310 that visually indicate to a user various options for interacting with IWB appliance 102. For example, some controls 308 may allow a user to switch between a window # 1 (labelled on FIG. 3A as element 302) and a window #2 (labelled on FIG. 3A as element 304). Some other buttons 308 may allow the user to select a window to be deleted or removed from IWB display 300, or select a window to be resized or stowed.

In embodiment, some controls 308 may by implemented as diode-lit buttons to indicate whether the data format of the data processed by one window instance generated and displayed on IWB display 300 is compatible with the data format of another window instance generated and displayed on IWB display 300. The window instances may be generated by executing any of web applications 119 and/or any of external web applications 132, 134. For example, upon selecting a first window 302 and a second window 304, each generated by executing web applications 119 and/or external applications 132, 134, a user may receive an indication that data displayed in first window 302 is compatible with the data format used by an application managing the display in second window 304, then a user may press a control 310 to request that the data from first window 302 be ported to and displayed in second window 304.

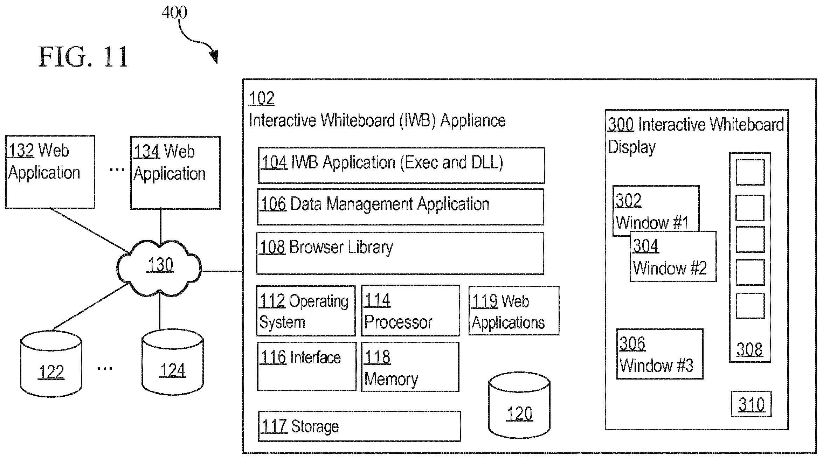

Arrangement 300 is not limited to the particular elements depicted in FIG. 3A and may include fewer or additional elements depending upon a particular implementation. Embodiments are described herein in the context of a single IWB appliance 102 for purposes of explanation, but the approach is applicable to any number of interactive whiteboard appliances. Another type of arrangement is depicted in FIG. 11.

FIG. 11 is a block diagram that depicts an arrangement 400 for open collaboration with multiple integrated services using an interactive whiteboard appliance 102 Arrangement 400 includes the elements already described in FIG. 1, FIG. 2 and FIG. 3A.

In an embodiment, both arrangement 300 of FIG. 3A and arrangement 400 of FIG. 11 include one or more windows displayed in IWB display 300. The count of the windows displayed in IWB display 300 may vary and is not limited to any specific count. For example, arrangement 300 of FIG. 3A includes two windows: window 302 and window 304. The windows in FIG. 3A do not overlap each other. However, arrangement 400 of FIG. 11 includes three windows: window 302, window 304, and window 306. As depicted in FIG. 11, windows 302 and 304 overlap each other, while window 306 does not overlap any other window in IWB display area.

Arrangement 400 is not limited the particular elements depicted in FIG. 11 and may include fewer or additional elements depending upon a particular implementation. Embodiments are described herein in the context of a single IWB appliance 102 for purposes of explanation, but the approach is applicable to any number of interactive whiteboard appliances.

### B. Example of Open Collaboration Using Dedicated Window Instances

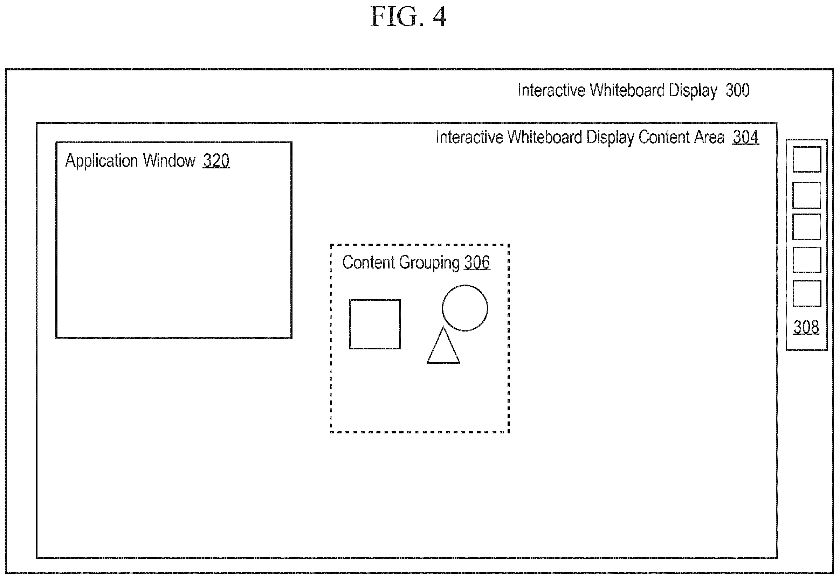

FIG. 4 is a block diagram that depicts an example IWB display 300 of an interactive whiteboard appliance 102. In an embodiment, IWB display 300 includes an IWB display content area 304 and a set of interactive whiteboard controls 308 which allow a user to perform various functions with respect to interactive whiteboard session window 302. The functions may facilitate providing requests to IWB appliance 102, receiving various indications from IWB appliance 102, and the like. IWB display content area 304 may include one or more application windows 320 and one or more content groupings 306.

In an embodiment, a startup process of IWB 102 is one of the prerequisites to enable open collaboration on IWB appliance 102. The startup process may be initiated, for example, in response to a user physically switching on IWB appliance 102, or in response to IWB appliance 102 detecting an electronic signal.

Once IWB appliance 102 is powered up, IWB application 104 is started. Execution of IWB application 104 may cause displaying content, allowing a user to change how the content is displayed and allowing the user to update the content. In an embodiment, IWB application 104 ensures that at least one application window 320 is displayed in IWB display content area 304 of IWB display 300. Furthermore, IWB application 104 starts monitoring one or more user interfaces to determine whether any request for open collaboration with multiple integrated services has been issued.

In an embodiment, IWB application 104 provides capabilities to a user to allow the user to request generating window instances, exchange information between IWB display 300, request storing information in local storage device and/or remote storage devices, and the like. For example, a user may use some controls from the set of controls 308 to select application window 320 in IWB display content area 304, and then using some other controls from the set of controls 308 to select some information displayed in application window 320 and cause displaying the selected information as various objects in content grouping 306 in IWB display content area 304.

### C. Example Workflow for Open Collaboration Using Dedicated Window Instances

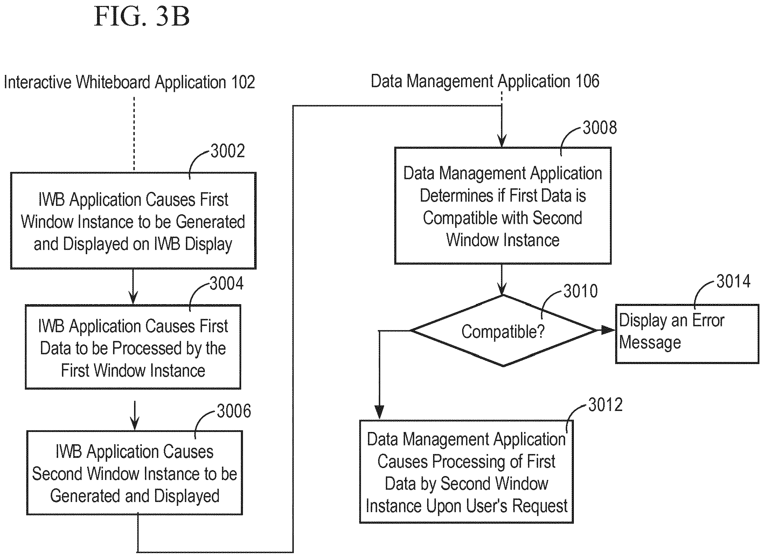

FIG. 3B is a flow diagram that depicts example activities performed during open collaboration with multiple integrated services using an interactive whiteboard appliance 102.

In step 3002, IWB application 104 executed on IWB 102 causes a first window instance to be generated and displayed on IWB display 300 of IWB appliance 102. The first window instance may be generated by either one of pre-loaded web applications 119 or one of external web applications 132, 134.

In step 3004, IWB application 104 causes first data to be processed by the first window instance generated and displayed on IWB display 300 of IWB appliance 102.

In step 3006, IWB application 104 causes a second window instance to be generated and displayed on IWB display 300 of IWB appliance 102. The second window instance may be generated by either one of pre-loaded web applications 119 or one of external web applications 132, 134.

At this point, IWB application 104 invokes data management application 106 and delegates the responsibilities to manage open collaboration between the application causing a generation of the first window instance and the application causing a generation of the second window instance.

In step 3008, data management application 106 executed on IWB 102 determines whether the first data processed by the first window instance generated and displayed on IWB display 300 of IWB appliance 102 is compatible with the second window instance generated and displayed on the same IWB display 300 of IWB appliance 102. For example, if first data processed by the first window instance is data in the PDF format, then data management application 106 determines whether the second window instance is capable of handling PDF data. If in step 3010, data management application 106 determined that the first data processed by the first window instance is compatible with the second window instance, then the process proceeds to step 3012. Otherwise, the process proceeds to step 3014.

In step 3012, in response to determining that the first data processed by the first window instance generated and displayed on IWB display 300 of IWB appliance 102 is compatible with the second window instance, data management application 106 awaits receiving user input selecting the second window instance. If such an input is received, then data management application 106 causes the first data to be processed by the second window instance.

However, if the first data processed by the first window instance is not compatible with the second window instance, then data management application 106 proceeds to step 3014, in which data management application 106 generates an error message or an error notification and causes displaying the error message/notification to be displayed for a user.

Referring again to step 3012, in this step, data management application 106 may cause the first data processed by the first window instance to be retrieved from one or more of a local storage of the interactive whiteboard appliance or a location external to the interactive whiteboard appliance.

Furthermore, in step 3012, data management application 106 may cause second data retrieved via a third window instance generated and displayed on IWB display 300 of IWB appliance 102, to be stored to one or more of a local storage of the interactive whiteboard appliance or a location external to the interactive whiteboard appliance.

Moreover, in step 3012, data management application 106 may receive a request to invoke an external web application. The request may comprise, for example, an Internet address of one of the external web applications 132, 134. Upon receiving the request, data management application 106 may cause accessing the external web application using the Internet address, and cause launching the external web application.

Upon receiving fourth data from an external web application, data management application 106 may cause a fourth window instance to be generated and displayed on IWB display 300 of IWB appliance 102, and cause the fourth data to be processed by the fourth window instance generated and displayed on the same display.

The approach may also include determining that contents of the fourth window instance displayed on the interactive whiteboard appliance has been updated by a user. In response to determining that the contents of the fourth window instance displayed on the interactive whiteboard appliance has been updated, data management application 106 may receive fifth data via the fourth window instance displayed on the display of the interactive whiteboard appliance. Upon receiving the first data, data management application may cause transmitting the fifth data, received via fourth window instance, to the external web application.

The above approach is provided to illustrate one of many types of open collaboration session with multiple integrated services. Additional examples are described in the following sections.

### D. Example Menu for Initiating Open Collaboration

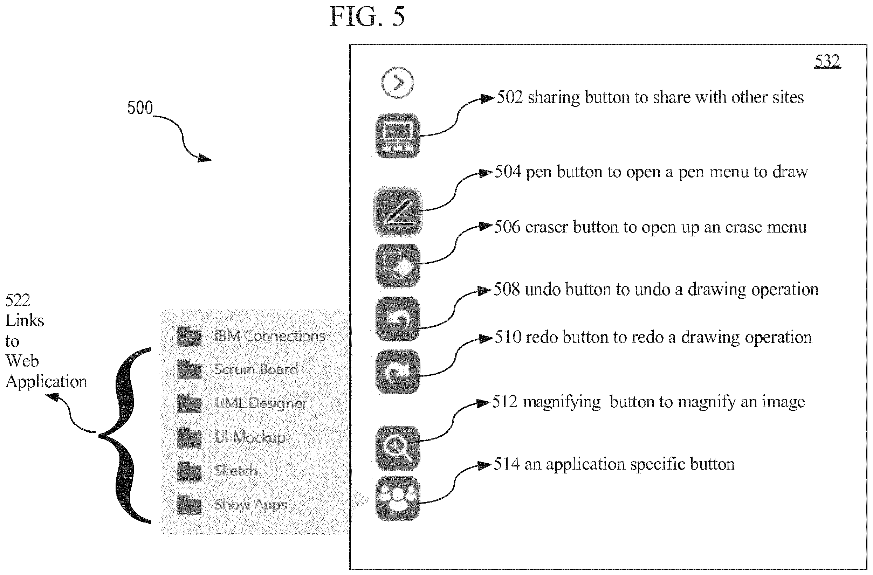

FIG. 5 is a screen snapshot that depicts an example menu 500 of an interactive whiteboard display 300 of an interactive whiteboard appliance. The depicted example is provided to illustrate one of many ways to design a graphic user interface for allowing a user to interact with IWB 102.

In the example depicted in FIG. 5, menu 500 comprises a set of hyperlinks 522 to web applications, and a set of controls 532. Set of hyperlinks 522 may include one or more icons that are labelled to correspond to respective web applications. Set of controls 532 includes one or more controls that may be specific to a particular web application already selected by a user. The selection of a particular web application may be performed by selecting a particular hyperlink from set of hyperlinks 522.

In an embodiment, set of hyperlinks 522 includes one or more selectable hyperlinks that are associated with respective URLs of the corresponding web applications. The corresponding web applications may include one or more pre-loaded web application, such web applications 119 depicted in FIG. 1. The corresponding web applications may also include one or more external web applications, such as web applications 132, 134 depicted in FIG. 2.

In the example depicted in FIG. 5, set of hyperlinks 522 includes selectable hyperlinks that correspond to IBM Connections, Scrum Board, UML Designer, UI Mockup, Sketch, and Show Apps, respectively. The above examples are provided to illustrate one of many examples of web applications that may be accessible from IWB 102.

As described above, menu 500 may also include set of controls 532, which may be specific to a particular web application selected by a user. Example set of controls 532 depicted in FIG. 5 includes controls that may be specific to the Sketch web application. This example, set of controls 532 may be displayed after a user selected, from set of hyperlinks 522, the hyperlink labelled as Sketch. Set of controls 532 specific to Sketch may include the following controls: a sharing button to share with other sites 502, a pen button to open a pen menu to draw 504, an eraser button to open up an erase menu 506, an undo button to undo a drawing operation 508, a redo button to redo a drawing operation 510, a magnifying button to magnify an image 512, and one or more application specific additional buttons 514. Other types of controls may also be implemented.

### E. Examples of Open Collaboration Using Dedicated Window Instances

Open collaboration sessions with multiple integrated services may be implemented for a variety of services provided by a variety of applications. The applications providing the integrated services may include web applications, such as web applications 119 of FIG. 1, and external web applications 132,134 of FIG. 3A. The examples provided below are provided to illustrate some of many open collaboration implementations.

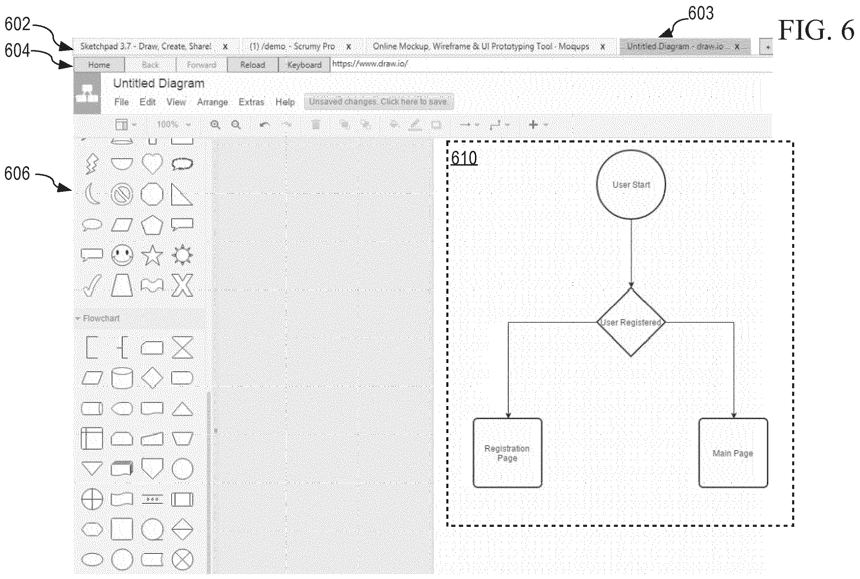

FIG. 6 is a screen snapshot that depicts an example interactive whiteboard display of an interactive whiteboard appliance facilitating collaboration with a drawing application. The screen snapshot includes an application tab 602, and an application display area 604.

Application tab 602 may include identifications of various applications that have been launched on IWB 102. In the depicted example, application tab 602 includes an identification of Sketchpad application, an identification of Scrumy Pro application, an identification of Online Mockup application, and an identification 603 of Draw application. The indication of Draw application is highlighted, indicating that Draw application is active and that display area 604 contains contents managed by Draw application.

In the depicted example, display area 604 includes several areas, each of which is dedicated to present different functionalities and data. Display area 604 may include a symbol and primitive area 606 that includes various icons and graphical representations of primitives that are available to a user via Draw applications.

Display area 604 may also include content display area 610 that may be used to display diagrams designed by a user using Draw application. Other areas, icons and tabs may also be displayed.

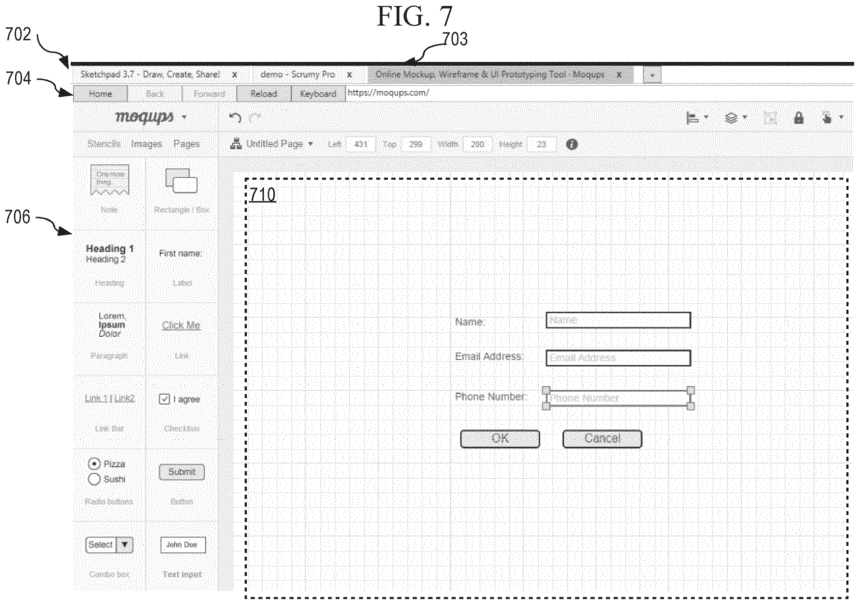

FIG. 7 is a screen snapshot that depicts an example interactive whiteboard display of an interactive whiteboard appliance facilitating collaboration with a prototyping application. The screen snapshot includes an application tab 702, and an application display area 704.

Application tab 702 may include identifications of various applications that have been launched on IWB 102. In the depicted example, application tab 702 includes an identification of Sketchpad application, an identification of Scrumy Pro application, and an identification 703 of Online Mockup application. The indication of Online Mockup application is highlighted, indicating that Online Mockup application is active and that display area 704 contains contents managed by Online Mockup application.

In the depicted example, display area 704 includes several areas, each of which is dedicated to present different functionalities and data. Display area 704 may include a symbol and primitive area 706 that includes various icons and graphical representations of primitives that are available to a user via Online Mockup application.

Display area 704 may also include content display area 710 that may be used to display diagrams designed by a user using Online Mockup. Other areas, icons and tabs may also be displayed.

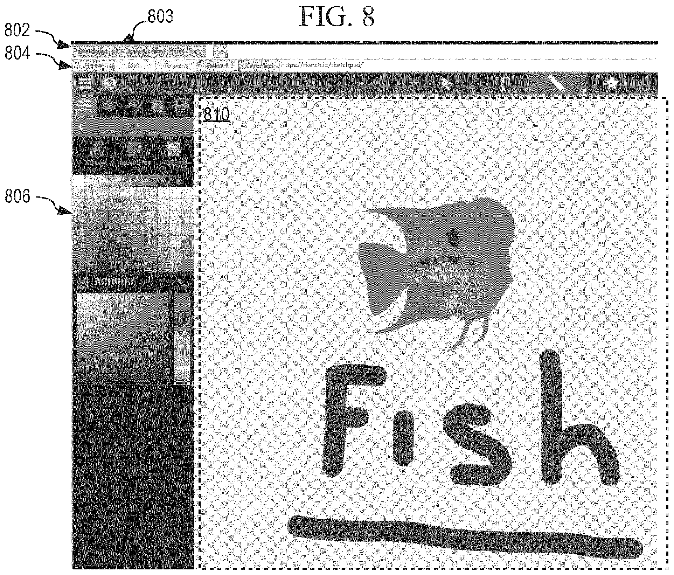

FIG. 8 is a screen snapshot that depicts an example interactive whiteboard display of an interactive whiteboard appliance facilitating collaboration with a sketching application. The screen snapshot includes an application tab 802, and an application display area 804.

Application tab 802 may include identifications of various applications that have been launched on IWB 102. In the depicted example, application tab 802 includes an identification 803 of Sketchpad application. The indication of Sketchpad application is highlighted, indicating that Sketchpad application is active and that display area 804 contains contents managed by Sketchpad application.

In the depicted example, display area 804 includes several areas, each of which is dedicated to present different functionalities and data. Display area 804 may include a symbol and primitive area 806 that includes various icons and graphical representations of primitives that are available to a user via Sketchpad application.

Display area 804 may also include content display area 810 that may be used to display diagrams designed by a user using Sketchpad application. Other areas, icons and tabs may also be displayed.

FIG. 9 is a screen snapshot that depicts an example interactive whiteboard display of an interactive whiteboard appliance facilitating collaboration with a Scrum application. The screen snapshot includes an application tab 902, and an application display area 904.

Application tab 902 may include identifications of various applications that have been launched on IWB 102. In the depicted example, application tab 902 includes an identification of Sketchpad application, and an identification of Scrumy Pro application. The indication of Scrumy Pro application is highlighted, indicating that Scrumy Pro application is active and that display area 004 contains contents managed by Scrumy Pro application.

Scrum and Scrumy Pro are included in an Agile framework for completing complex, usually business-related, projects. The Scrum framework includes teams, also referred to as Scrum Teams. The teams have associated roles. The framework also include events, artifacts, and rules that govern interactions between the framework elements. The rules of Scrum bind together the events, roles, and artifacts, governing the relationships and interaction. Each component within the framework serves a specific purpose and is essential to Scrum's success and usage.

In the depicted example, display area 904 includes several areas, each of which is dedicated to present different functionalities and data. Display area 904 may include a navigation area 906 that includes various icons and graphical representations of navigation and control request hat are available to a user via Scrumy Pro application.

Display area 904 may also include content display area 910 that may be used to display diagrams designed by a user using Scrumy Pro application. Other areas, icons and tabs may also be displayed.

### VI. EXTENSIONS

In an embodiment, the open collaboration whiteboard architecture is configured to provide a wide spectrum of functionalities. For example, the architecture may be configured to provide annotation capabilities compatible with optical character recognition (OCR) applications. Furthermore, the whiteboard may allow saving, exporting and importing annotations in multiple file formats. Moreover, the whiteboard may be configured to receive and process intelligent commands for adding actions or notes, or to receive and process voice commands to identify key events, such as events taking a place during a meeting, and the like.

In an embodiment, one or more files used by whiteboard applications are downloaded and/or imported from cloud services such as Box, Dropbox, Google Drive, Evernote, and the like. The files may also be stored at and/or exported to the corresponding cloud services.

The open collaboration whiteboard architecture may also provide multi-touch capabilities for multi-user annotation. Moreover, the architecture may also provide annotation capabilities across Web, Mobile and Standalone solutions.

An example solution implemented in IWB 102 is Ricoh's Open Collaboration Board (OCB). The OCB is a Conferencing and Collaboration solution which supports a rich set of features and functionalities across an entire conferencing life cycle. OCB is an integrated and holistic solution which provides support for the following use cases: real time annotation, archive and sharing capabilities, and real time collaboration with multi-site and remote end users. OCB also provides support for integrating leading conferencing solutions such as Lync, Webex, Pexip, UCS, Blue Jeans, and the like. OCB also provides support for a real time annotation and synchronizing features across applications and devices. summarizing and archiving conferencing slides, videos and other artifacts, synchronizing files with leading cloud storage services, providing CMS facilities for contents such as content authoring, sharing, versioning, providing reporting and analytical capabilities to dig into insights, supporting LDAP/AD and other secure authentication mechanisms, integrating with MPS/MDS solutions, and managing real time project management capabilities, such as War Room, Huddle, Agile, Lean, and the like.

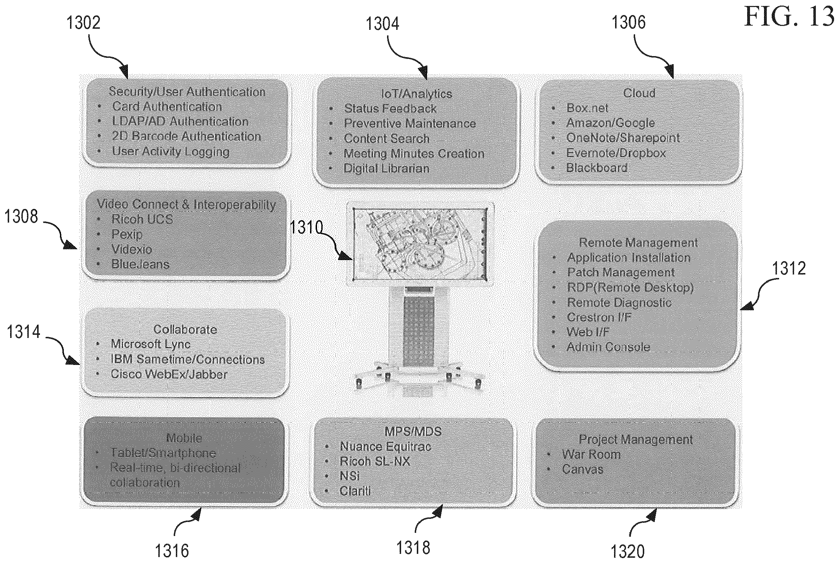

The scope of the capabilities described above may be extended either further. Examples of such extensions are described in FIG. 13-14.

### A. First Example

FIG. 13 is a block diagram that depicts extensions to an open collaboration approach using an interactive whiteboard appliance 1310. In the depicted example, an open collaboration approach based on IWB 1310 has been extended to implement security and user authentication capabilities 1302, IoT analytics capabilities 1304, cloud services 1306, video connect and interoperability capabilities 1308, remote management capabilities 1312, mobile capabilities 1316, MPS/MDS capabilities 1318, and project management capabilities 1320. Example implementations are described below.

In an embodiment, an implementation of security and user authentication capabilities 1302 on an IWB includes a card authentication. For example, a user may be granted an access to the IWB and to collaboration solutions upon providing a user's credentials. The user may provide the credentials by entering the credentials manually or by placing an authentication card in from of a sensor mounted on the IWB. Another way of providing the credentials to the system is based on a finger print authentication, a picture-based authentication, an eye-iris-based authentication, and the like.

An IWB may also be configured to provide LDAP / AD authentication by, for example, integrating that capabilities with corporate directories. Authentication may also be performed based on sensors configured to read bar codes, QR codes, and the like. For example, the bar code reading capabilities may be integrated to facilitate login operations, joining open collaboration sessions, and the like.

An IWB may further be configured to monitor user activities. For example, the whiteboard may be configured to execute applications configured to monitor login, logout, join-meeting, and other activity.

In an embodiment, IoT analytics capabilities 1304 implemented in an IWB include data collection and transfer. This may include for example, collecting critical information and transmitting the collected data to IoT platforms, such as Bluemix. This may also include performing a data analysis and performing a data visualization. For example, this may include a visualization of data collected during a meeting conducted using the IWB. IoT analytics capabilities 1304 may also include generating reports and analytical insights; these may include information about meeting locations, attendees, the GPS information related to the meeting and the attendees, information about the weather conditions, information about a meeting duration and productivity, statistical information about the meetings, service level analytics, such as uptime, downtime, and the like.

IoT analytics capabilities 1304 may also include the capabilities to provide status information and feedback. This may include providing information about preventive maintenance, and data maintenance. For example, this may include providing information about maintaining the files and data associated meetings, the audio and video recording associated with meetings, the content generated by OCR applications invoked in relation with the meetings, and the like. That may also include information about searched content, as well as content archives. For example, this may include information indicating whether the content was stored in a cloud storage, a USB drive, a local drive, a CMS (IBM Connections, Share Point) storage, and the like.

IoT analytics capabilities 1304 may also include the capabilities to store information about content transfer. For example, the capabilities may include the information about emails that have been sent and that contain a particular content, attachments, calendar invites, users' cloud accounts and other accounts.

IoT analytics capabilities 1304 may also include the capabilities to manage meetings. For example, the capabilities may allow creating meeting minutes, generating a summary of the meeting, or generating a list of action items and project dashboards.

IoT analytics capabilities 1304 may also include the capabilities to implement a digital librarian. For example, the capabilities may allow indexing and searching contents, sharing emails and contents, versioning of the contents, and provide additional services.

In an embodiment, cloud services 1306 include capabilities to manage a cloud storage. This may include integrating an IWB with various cloud storage services, such as Box, Drive, Dropbox, Evernote, Amazon S3, OneNote, SharePoint, and Blackboard LMS. This may also include managing, importing, exporting and saving conferencing slides, videos and artifacts. This may be extended to implementing an OCB authentication with any cloud storage service for end users using supported authentication and authorization mechanisms.

In an embodiment, video connect and interoperability capabilities 1308 include capabilities to manage interactivity between an IWB and various video connect solutions. For example, this may include integrating with Ricoh UCS the solutions such as Pexip, Videxio, BlueJeans, Lync, WebRTC, Office365, SIP and H.323 clients. This may also include managing real time sharing of video with conferencing solutions, and providing interoperability across the various solutions.

In an embodiment, remote management capabilities 1312 include capabilities to manage an IWB remotely. This may include remote installations of various software application on the IWB. This may also include remote installation of patches and updates on the IWB, remote desktop management, remote diagnostics, and using a Crestron interface to monitor and control devices through integrating the IWB with Crestron APIs. This may also include providing a programmable web interface and an administrator console to remotely managing the IWB.

In an embodiment, mobile capabilities 1316 include capabilities to manage communications between an IWB and mobile devices. For example, this may include providing an interface between the IWB and mobile devices such as tablets, smartphones, and the like, to facilitate open collaboration capabilities in real-time to users equipped with the tablets and smartphones to support bi-directional collaboration mechanism.

In an embodiment, MPS/MDS capabilities 1318 include capabilities to integrate with an IWB various MPS/MDS solutions such as, Nuance Equitrac, Ricoh SL-NX, NSi, and Clariti.

In an embodiment, project management capabilities 1320 include capabilities to integrate with an IWB capabilities of the War Room and Canvas. The war room capabilities include providing a real time display and status information of project management activities across all locations, and concurrent updating and collaboration of project to synchronize across all devices and solutions utilizing the IWB. Additional capabilities may include integrating the capabilities of Scrum Board, Task Board, Schedule Board, Project Health, Kanban Board, and Agile Burn down charts. The Canvas capabilities may include Kanban Canvas, Feedback Canvas, Project Canvas, and others.

### B. Second Example

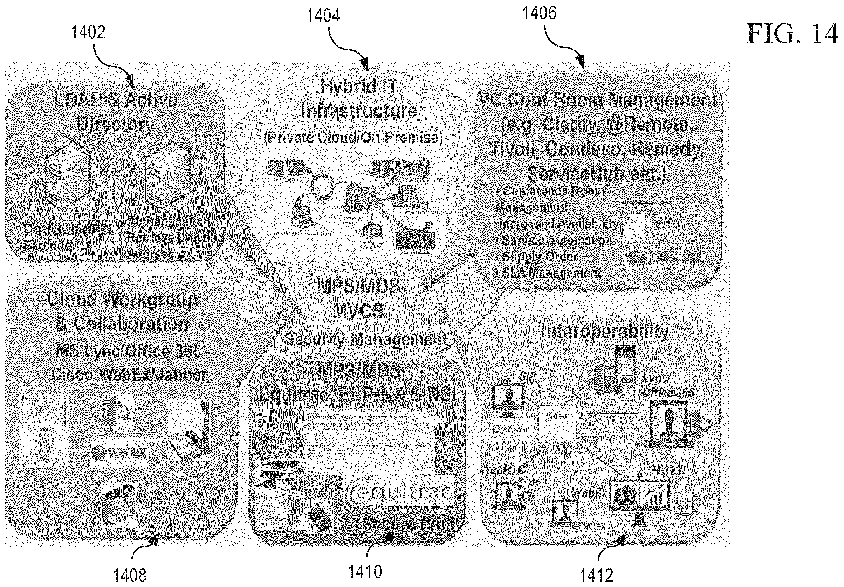

FIG. 14 is a block diagram that depicts extensions to an open collaboration approach using an interactive whiteboard appliance. In the depicted example, an open collaboration approach based on IWB has been extended to implement LDAP and Active Directory functionalities 1402, hybrid IT infrastructure functionalities 1404, VC conference room management functionalities 1406, cloud workgroup and collaboration functionalities 1408, MPS/MDS functionalities 1410, interoperability functionalities 1412 and MPS/MDS functionalities 1414.

In an embodiment, LDAP and active directory functionalities 1402 include security and authentication functionalities such as a card authentication, LDAP/AD authentication, a bar code authentication, a QR code authentication, and the like.

In an embodiment, hybrid IT infrastructure functionalities 1404 include functionalities facilitating storing and retrieving data from a cloud system, maintaining access to a cloud system, maintaining local and remote storage devices, and the like.

In an embodiment, VC conference room management functionalities 1406 include functionalities for managing a conference-room open collaboration. This may include providing functionalities to integrate solutions such as Condeco, Clarity, Tivoli, Remedy, ServiceHub, as well as providing functionalities of service and supply management, including a high availability management, a service automation, a supply order management, an SLA management, and the like.

In an embodiment, cloud workgroup and collaboration functionalities 1408 include conferencing functionalities and cross-platform functionalities. This may include providing functionalities to integrate an IWB with Lync, IBM Same time, Connections, Cisco Webex/Jabber and other conferencing solutions. This may also include managing connection, users and real time sharing of annotation with conferencing solutions. Furthermore, this may include providing the capabilities to start a meeting from the point where it is left off last time. This may also include supporting collaboration across multiple and remote locations, providing integration with Calendar to join meeting from calendar and displaying meeting files in Calendar invite. Examples of the cross platform functionalities may include the functionalities to support collaboration across Desktop, Mobile and Web based applications so that solution meets the need of broad set of users, allowing users to join conference from any device from anywhere, and extending the annotation and sharing capabilities across Web and Mobile solutions.

In an embodiment, MPS/MDS functionalities 1410 include functionalities for integrating with an IWB MPS/MDS solutions such as: Nuance Equitrac, Ricoh SL-NX, NSi, and Clariti

In an embodiment, interoperability functionalities 1412 include functionalities for integrating an IWB with Lync, IBM Same time / Connections, Cisco Webex/Jabber and other conferencing solutions

Additional extensions and enhancements for open collaboration utilizing multiple integrated services may also be implemented.

### VII. IMPLEMENTATION MECHANISMS

Although the flow diagrams of the present application depict a particular set of steps in a particular order, other implementations may use fewer or more steps, in the same or different order, than those depicted in the figures.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

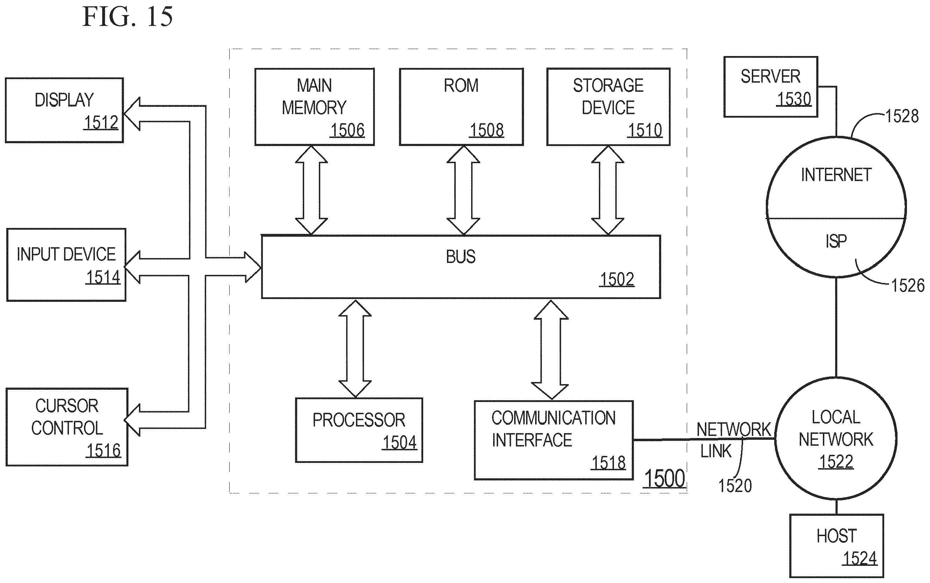

FIG. 15 is a block diagram that depicts an example computer system 1500 upon which embodiments may be implemented. Computer system 1500 includes a bus 1502 or other communication mechanism for communicating information, and a processor 1504 coupled with bus 1502 for processing information. Computer system 1500 also includes a main memory 1506, such as a random access memory (RAM) or other dynamic storage device, coupled to bus 1502 for storing information and instructions to be executed by processor 1504. Main memory 1506 also may be used for storing temporary variables or other intermediate information during execution of instructions to be executed by processor 1504. Computer system 1500 further includes a read only memory (ROM) 1508 or other static storage device coupled to bus 1502 for storing static information and instructions for processor 1504. A storage device 1510, such as a magnetic disk or optical disk, is provided and coupled to bus 1502 for storing information and instructions.

Computer system 1500 may be coupled via bus 1502 to a display 1512, such as a cathode ray tube (CRT), for displaying information to a computer user. Although bus 1502 is illustrated as a single bus, bus 1502 may comprise one or more buses. For example, bus 1502 may include without limitation a control bus by which processor 1504 controls other devices within computer system 1500, an address bus by which processor 1504 specifies memory locations of instructions for execution, or any other type of bus for transferring data or signals between components of computer system 1500.

An input device 1514, including alphanumeric and other keys, is coupled to bus 1502 for communicating information and command selections to processor 1504. Another type of user input device is cursor control 1516, such as a mouse, a trackball, or cursor direction keys for communicating direction information and command selections to processor 1504 and for controlling cursor movement on display 1512. This input device typically has two degrees of freedom in two axes, a first axis (e.g., x) and a second axis (e.g., y), that allows the device to specify positions in a plane.

Computer system 1500 may implement the techniques described herein using customized hard-wired logic, one or more ASICs or FPGAs, firmware and/or program logic or computer software which, in combination with the computer system, causes or programs computer system 1500 to be a special-purpose machine. According to one embodiment, those techniques are performed by computer system 1500 in response to processor 1504 processing instructions stored in main memory 1506. Such instructions may be read into main memory 1506 from another computer-readable medium, such as storage device 1510. Processing of the instructions contained in main memory 1506 by processor 1504 causes performance of the functionality described herein. In alternative embodiments, hard-wired circuitry may be used in place of or in combination with software instructions to implement the embodiments. Thus, embodiments are not limited to any specific combination of hardware circuitry and software.

The term "computer-readable medium" as used herein refers to any medium that participates in providing data that causes a computer to operate in a specific manner. In an embodiment implemented using computer system 1500, various computer-readable media are involved, for example, in providing instructions to processor 1504 for execution. Such a medium may take many forms, including but not limited to, non-volatile media and volatile media. Non-volatile media includes, for example, optical or magnetic disks, such as storage device 1510. Volatile media includes dynamic memory, such as main memory 1506. Common forms of computer-readable media include, without limitation, a floppy disk, a flexible disk, hard disk, magnetic tape, or any other magnetic medium, a CD-ROM, any other optical medium, a RAM, a PROM, and EPROM, a FLASH-EPROM, any other memory chip, memory cartridge or memory stick, or any other medium from which a computer can read.

Various forms of computer-readable media may be involved in storing instructions for processing by processor 1504. For example, the instructions may initially be stored on a storage medium of a remote computer and transmitted to computer system 1500 via one or more communications links. Bus 1502 carries the data to main memory 1506, from which processor 1504 retrieves and processes the instructions. The instructions received by main memory 1506 may optionally be stored on storage device 1510 either before or after processing by processor 1504.

Computer system 1500 also includes a communication interface 1518 coupled to bus 1502. Communication interface 1518 provides a communications coupling to a network link 1520 that is connected to a local network 1522. For example, communication interface 1518 may be a modem to provide a data communication connection to a telephone line. As another example, communication interface 1518 may be a local area network (LAN) card to provide a data communication connection to a compatible LAN. Wireless links may also be implemented. In any such implementation, communication interface 1518 sends and receives electrical, electromagnetic or optical signals that carry digital data streams representing various types of information.

Network link 1520 typically provides data communication through one or more networks to other data devices. For example, network link 1520 may provide a connection through local network 1522 to a host computer 1524 or to data equipment operated by an Internet Service Provider (ISP) 1526. ISP 1526 in turn provides data communication services through the world wide packet data communication network now commonly referred to as the "Internet" 1528. Local network 1522 and Internet 1528 both use electrical, electromagnetic or optical signals that carry digital data streams.

Computer system 1500 can send messages and receive data, including program code, through the network(s), network link 1520 and communication interface 1518. In the Internet example, a server 1530 might transmit a requested code for an application program through Internet 1528, ISP 1526, local network 1522 and communication interface 1518. The received code may be processed by processor 1504 as it is received, and/or stored in storage device 1510, or other non-volatile storage for later execution.
In the foregoing specification, embodiments have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A computing interactive whiteboard appliance comprising:
one or more processors;
one or more memories;
a display;
an interactive whiteboard application executing on a computing device and performing:
receiving a request to invoke a web application, wherein the request comprises an Internet address of the web application; and
a data management application executing on the computing device and performing:
causing accessing the web application using the Internet address;
upon accessing the web application:
causing launching the web application on the computing interactive whiteboard appliance;
detecting that first data has been received from the web application;
causing a first window instance to be generated and displayed on the display of the computing interactive whiteboard appliance; and
causing the first data to be processed by the first window instance and displayed on the display of the computing interactive whiteboard appliance.

2. The computing interactive whiteboard appliance of Claim 1, wherein the data management application is further performing:
detecting that second data has been entered via the first window instance by a user;
extracting the second data from the first window instance;
causing the web application to receive the second data; and
awaiting receiving third data from the web application.

3. The computing interactive whiteboard appliance of Claim 2, wherein the data management application is further performing:
in response to detecting that third data has been received from the web application:
causing a second window instance to be generated and displayed on the display of the computing interactive whiteboard appliance; and
causing the third data to be processed by the second window instance and displayed on the display of the computing interactive whiteboard appliance.

4. The computing interactive whiteboard appliance of Claim 2, wherein the data management application is further performing:
in response to detecting that third data has been received from the web application:
causing the first window instance to be updated and displayed on the display of the computing interactive whiteboard appliance; and
causing the third data to be processed by the first window instance and displayed on the display of the computing interactive whiteboard appliance.

5. The computing interactive whiteboard appliance of Claim 1, wherein the interactive whiteboard application is further performing:
causing a graphical user interface to be generated and displayed on the display of the computing interactive whiteboard appliance;
causing one or more graphical user interface objects on the graphical user interface that visually indicate to a user of the computing interactive whiteboard appliance one or more web applications that may be launched on the computing interactive whiteboard appliance; and
detecting a user selection of a particular graphical user interface object, from the one or more graphical user interface objects, wherein the user selection of the particular graphical user interface object indicates a particular web application, from the one or more web applications.

6. The computing interactive whiteboard appliance of Claim 1, wherein the web application is a first web application installed at and served from a server that is local to the computing interactive whiteboard appliance.

7. The computing interactive whiteboard appliance of Claim 1, wherein the web application is a second web application installed at and served from a server that is remote with respect to the computing interactive whiteboard appliance.

8. One or more non-transitory computer-readable media storing instructions which, when processed by one or more processors, cause:
receiving, at a computing interactive whiteboard appliance, a request to invoke a web application, wherein the request comprises an Internet address of the web application;
causing, by a data management application, accessing the web application using the Internet address;
upon accessing the web application:
causing launching the web application on the computing interactive whiteboard appliance;
detecting that first data has been received from the web application;
causing a first window instance to be generated and displayed on a display of the computing interactive whiteboard appliance; and
causing the first data to be processed by the first window instance and displayed on the display of the computing interactive whiteboard appliance.

9. The one or more non-transitory computer-readable media of Claim 8, storing additional instructions which, when executed by the one or more processors, cause:
detecting that second data has been entered via the first window instance by a user;
extracting the second data from the first window instance;
causing the web application to receive the second data; and
awaiting receiving third data from the web application.

10. The one or more non-transitory computer-readable media of Claim 9, storing additional instructions which, when executed by the one or more processors, cause:
in response to detecting that third data has been received from the web application:
causing a second window instance to be generated and displayed on the display of the computing interactive whiteboard appliance; and
causing the third data to be processed by the second window instance and displayed on the display of the computing interactive whiteboard appliance.

11. The one or more non-transitory computer-readable media of Claim 9, storing additional instructions which, when executed by the one or more processors, cause the one or more processors to perform:
in response to detecting that third data has been received from the web application:
causing the first window instance to be updated and displayed on the display of the computing interactive whiteboard appliance; and
causing the third data to be processed by the first window instance and displayed on the display of the computing interactive whiteboard appliance.

12. The one or more non-transitory computer-readable media of Claim 8, storing additional instructions which, when executed by the one or more processors, cause the one or more processors to perform:
causing a graphical user interface to be generated and displayed on the display of the computing interactive whiteboard appliance;
causing one or more graphical user interface objects on the graphical user interface that visually indicate to a user of the computing interactive whiteboard appliance one or more web applications that may be launched on the computing interactive whiteboard appliance; and
detecting a user selection of a particular graphical user interface object, from the one or more graphical user interface objects, wherein the user selection of the particular graphical user interface object indicates a particular web application, from the one or more web applications.

13. A computer-implemented method comprising:
receiving, at a computing interactive whiteboard appliance, a request to invoke a web application, wherein the request comprises an Internet address of the web application;
causing, by a data management application, accessing the web application using the Internet address;
upon accessing the web application:
causing launching the web application on the computing interactive whiteboard appliance;
detecting that first data has been received from the web application;
causing a first window instance to be generated and displayed on a display of the computing interactive whiteboard appliance; and
causing the first data to be processed by the first window instance and displayed on the display of the computing interactive whiteboard appliance.

14. The computer-implemented method of Claim 13, further comprising:
in response to detecting that third data has been received from the web application:
causing a second window instance to be generated and displayed on the display of the computing interactive whiteboard appliance; and
causing the third data to be processed by the second window instance and displayed on the display of the computing interactive whiteboard appliance.

15. The computer-implemented method of Claim 13, further comprising:
in response to detecting that third data has been received from the web application:
causing the first window instance to be updated and displayed on the display of the computing interactive whiteboard appliance; and
causing the third data to be processed by the first window instance and displayed on the display of the computing interactive whiteboard appliance.
